# DEMANDE DE BREVET EUROPEEN

(11) **EP 0 743 503 A2**
(43) Date de publication de la demande: **20.11.1996**
(21) Numéro de dépôt: 96401004.5
(22) Date de dépôt: 10.05.1996
(51) Int. Cl.: G01B 3/30

(54) **Système de règles-étalon et son utilisation pour l'étalonnage d'un système de mesure de précision**

(30) Priorité: 16.05.1995 FR 9505756
(71) Demandeur: Srebot, Robert, 91130 Ris-Orangis (FR)
(72) Inventeur: Srebot, Robert, 91130 Ris-Orangis (FR)
(74) Mandataire: Hasenrader, Hubert

(57) **Abrégé**

L'invention est relative à un système de règles-étalons et son utilisation pour l'étalonnage d'un système de mesure de précision.

Selon l'invention, le système de règles-étalons pour l'étalonnage d'appareillage de métrologie de longueur basé sur la mesure par comparaison comporte au moins une règle-étalon (10,16,18,20). Chacune des règles-étalons est composée d'un élément principal de règle-étalon (10), d'au moins une cale de réglage (16) fixée sur une des extrémités de l'élément principal de règle-étalon et dimensionnée avec précision pour ajuster la longueur de la règle-étalon, d'au moins une cale d'extrémité (18,28) raccordée sur l'extrémité de l'élément principal de règle-étalon avec interposition de la cale de réglage dans le prolongement de la règle-étalon, et d'un moyen de fixation amovible de précision de telle sorte que la cale d'extrémité (18,28) soit appliquée contre la cale de réglage (16) et que la cale de réglage (16) soit appliquée contre l'extrémité de l'élément principal de règle-étalon.

La cale de réglage et le mode d'assemblage du système de règles-étalons permettent d'obtenir une grande précision pour un étalon de longueur modulable.

## Description

La présente invention se rapporte à un système de règles-étalons pour l'étalonnage d'appareillage de métrologie de longueur basé sur la mesure par comparaison comportant au moins une règle-étalon.

Le système de règles-étalons selon l'invention peut être utilisé de façon générale pour étalonner tout système de mesure de longueur de précision et en particulier un système comprenant une règle d'usage sur laquelle coulissent des supports pour pige de contact.

L'invention a pour but de réaliser un système de règles-étalons qui puisse être utilisé à tout moment pour étalonner des systèmes de mesure de longueur différents par leur gamme de mesure ou par le type de mesure réalisé : cote extérieure ou cote intérieure.

De plus, il est nécessaire que le système de règles-étalons, soit d'une grande précision puisqu'il va étalonner le système de mesure.

Il est souhaitable, en outre, que le système de règles-étalons selon l'invention soit d'une grande stabilité dimensionnelle tout en étant, de préférence, robuste et léger.

Les objectifs précédents sont atteints par la présente invention grâce à une conception modulaire du système de règles-étalons et à la présence d'une cale télescopique de longueur variable.

Cette conception représente une solution économique car le système de règles-étalons sera utilisable pour différents appareils de mesure de longueur par comparaison et une réparation éventuelle ne portera pas sur l'ensemble des règles-étalons.

Un système d'assemblage précis entre les différentes règles-étalons permet une grande précision de longueur pour chacune des règles-étalons et pour l'ensemble formé par au moins deux d'entre elles.

Il est de préférence prévu que la partie centrale des règles-étalons soit en carbone afin d'allier la légèreté, la robustesse et la précision de chaque règle-étalon.

Ce système de règles-étalons s'adresse à tout utilisateur confronté au problème de mesure précise sur des pièces de petites et grandes dimensions dans des environnements aussi différents qu'un laboratoire à température constante et contrôlée ou un atelier de production présentant des écarts de température importants dans le temps.

Un des buts de l'invention est donc de réaliser un système de règles-étalons qui forme des étalons de longueurs différentes, précis, robustes, légers et stables.

Un autre but de l'invention est de prévoir un dispositif de mesure de précision qui sera étalonné avec le système de règles-étalons.

L'objet de l'invention est un système de règles-étalons pour l'étalonnage d'appareillage de métrologie de longueur basé sur la mesure par comparaison comportant au moins une règle-étalon, chacune des règles-étalons est composée essentiellement d'un élément principal de règle-étalon, chacune des règles-étalons comprend en outre au moins une cale de réglage fixée sur une des extrémités de l'élément principal de règle-étalon et dimensionnée avec précision pour ajuster la longueur de la règle-étalon; chaque règle-étalon présente en outre au moins une cale d'extrémité raccordée sur l'extrémité de l'élément principal de règle-étalon avec interposition de la cale de réglage dans le prolongement de la règle-étalon et un moyen de fixation amovible de précision de telle sorte que la cale d'extrémité soit appliquée contre la cale de réglage et que la cale de réglage soit appliquée contre l'extrémité de l'élément principal de règle-étalon.

L'invention a également pour objet un système de mesure de précision dont la longueur utile est réglable à l'aide du système de règles-étalons.

La cale de réglage est celle qui, lors de la fabrication ou plus exactement de l'usinage des divers éléments du système de règles-étalons, est rectifiée très précisément afin que la longueur totale d'une règle-étalon soit très précisément la longueur prévue et annoncée pour cette règle-étalon.

Les faces de références pour l'étalonnage sont situées sur des cales d'extrémité positionnées aux extrémités terminales de l'ensemble formé par les règles-étalons mises bout à bout et liées entre elles, cet ensemble constituant le système de règles-étalons.

D'avantageuses dispositions énoncées ci-après sont en outre de préférence adoptées.
- le moyen de fixation amovible de précision est constitué par un excentrique de montage destiné à coopérer avec des alésages situés au niveau de la cale d'extrémité d'une part et dans la partie terminale de l'élément principal de règle-étalon d'autre part de façon à solidariser chaque cale d'extrémité avec la partie terminale de l'élément principal de règle-étalon.

La fixation par excentrique réalise un montage sûr, précis et rapide entre les cales d'extrémité et l'élément principal de règle-étalon. Ainsi, l'utilisateur pourra facilement démonter ce système de fixation pour changer la cale d'extrémité contre une autre cale d'extrémité et/ou pour accéder à la cale de réglage afin de la changer ou de la rectifier. Une cale de réglage est fixée à chaque extrémité de l'élément principal de règle-étalon avec contact plan entre une face plane arrière de la cale de réglage et une face plane avant correspondante située à l'extrémité de l'élément principal de règle-étalon. Un autre contact plan se réalise entre une face plane avant de la cale de réglage et une face arrière de la cale d'extrémité. De cette manière, la cale d'extrémité n'a aucune liberté de mouvement selon l'axe principal de la règle-étalon car, d'une part, la cale-étalon est bloquée en translation et en rotation par l'excentrique qui la traverse et, d'autre part, la cale d'extrémité est plaquée contre la cale de réglage afin d'annuler un éventuel jeu résiduel issu de la fixation par l'excentrique.

Les éléments principaux de règle-étalon sont composés d'une cale-étalon et de deux éléments de support en forme de U qui prolongent les deux extrémités de la cale-étalon et constituent les parties terminales de l'élément principal de règle-étalon, chacune desdites cales de réglage étant fixée sur un desdits éléments de support.

Le système de règles-étalons selon l'invention permet à partir d'un jeu de règles-étalons analogue à une boîte de poids, de réaliser un étalon de longueur voulue en reliant bout à bout plusieurs règles-étalons. Cette liaison se matérialise par la cale de liaison qui est un élément en une seule pièce dont la longueur totale est supérieure ou égale à la longueur de deux cales d'extrémités et qui possède deux alésage qui vont coopérer avec les deux excentriques et des alésages situés dans les deux éléments supports des extrémités en regard de deux règles-étalons voisines.

Les cales d'extrémité c'est-à-dire cales de mesure et cales de liaison sont des parallélépipèdes insérés entre les deux branches de l'élément de support en forme de U.

Le système de règles-étalons selon l'invention sera de préférence utilisé pour l'étalonnage d'un système de mesure de précision composé d'au moins une règle d'usage sous forme de gabarits de longueur diverses et de deux supports de pige qui peuvent être montés de manière coulissante et réglable sur l'une des règles d'usage, les supports de pige étant munis d'une glissière orthogonale à leur coulissement pour permettre le réglage de certaines piges de contact dans cette direction grâce à des coulisseaux qui supportent ces piges et qui coopèrent avec la glissière, chaque support de pige étant fixé sur la règle d'usage au moyen d'un excentrique.

Un tel système de mesure de précision sera décrit en détail plus loin en référence à la figure correspondante.

L'invention sera mieux comprise, et des caractéristiques secondaires et leurs avantages apparaîtront au cours de la description d'un mode de réalisation donnée ci-dessous à titre d'exemple.

Il est entendu que la description et les dessins ne sont donnés qu'à titre indicatif et non limitatif.

Il sera fait référence aux dessins, dans lesquels:
- la figure 1 est une perspective éclatée des divers éléments constituant la partie terminale du système de règles-étalons.
- la figure 2 est une élévation en coupe partielle des mêmes éléments que la figure 1 lorsqu'ils sont montés.
- la figure 3 est une vue en perspective d'une règle-étalon télescopique.
- la figure 4 est une vue en perspective d'une règle-étalon avec une cale de liaison et une cale de mesure.
- la figure 5 est une vue schématique de face partiellement transparente d'un système de règles-étalons formé par le montage des règles-étalons des figures 3 et 4.
- la figure 6 est une vue de face du montage pour l'étalonnage d'un système de mesure de longueur monté sur un bâti grâce au système de règles-étalons de la figure 5.

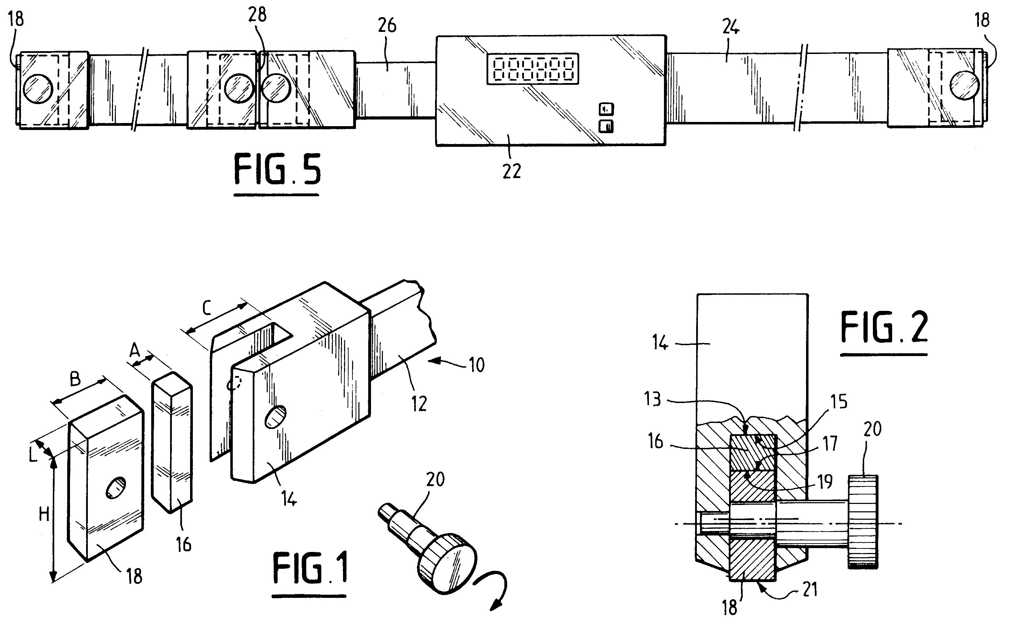

La figure 1 représente séparément tous les éléments qui vont constituer la partie terminale du système de règles-étalons grâce à un système d'assemblage précis. Tous les éléments nécessaires à la réalisation d'un ensemble corps de cale sont représentés: un élément principal de règle-étalon 10 composé d'une cale-étalon 12 prolongée par un élément de support 14 en forme de U et une cale de réglage 16. Une cale d'extrémité sous la forme d'une cale de mesure 18 et un excentrique 20 s'ajoutent à l'ensemble corps de cale pour réaliser une règle-étalon.

La cale-étalon 12 est en carbone et présente une section rectangulaire, tous les autres éléments sont métalliques. L'élément de support 14 est enchâssé et fixé à l'extrémité de la cale-étalon 12 du côté de la base du U, l'ouverture du U est tournée vers l'extérieur selon l'axe de la règle-étalon. Chacune des deux branches du U est percée d'un alésage coaxial avec l'alésage situé à travers l'autre branche du U. Ces deux alésages sont destinés à coopérer avec l'excentrique 20. La cale de réglage 16 est un parallélépipède rectangle qui va exactement s'insérer dans le profil creux en forme de U de l'élément de support 14, contre la face 13 de la base du U tournée vers le profil creux. Toutefois la longueur A de la cale de réglage 16 est très inférieure à la longueur C des faces en regard des branches du U et lorsque la cale de réglage est en place, elle ne s'étend pas jusqu'aux alésages. La cale de réglage 16 est fixée de façon amovible contre l'élément de support 14, par exemple grâce à deux vis, sans que cette fixation ne perturbe les contacts plans entre cette cale de réglage 16 d'une part, et l'élément de support 14 et la cale d'extrémité d'autre part.

La cale de mesure 18 ainsi que les cales d'extrémité et les cales de réglage sont des parallélépipèdes rectangles dont la largeur L et la hauteur H sont ajustées de façon serrée à la largeur et la hauteur du profil creux en forme de U de l'élément de support 14. Ceci va permettre à la cale de mesure 18 de venir s'insérer contre la cale de réglage 16 et combler le profit creux en forme de U de l'élément de support 14.

Comme représenté sur les figures 1 et 2 la cale de mesure 18 est également percée transversalement afin que l'axe de cet alésage coïncide sensiblement avec l'axe des alésages de l'élément de support 14 lorsque la cale de mesure 18 est insérée dans le profil creux en forme de U contre la cale de réglage 16.

L'excentrique 20 va fixer de façon serrée la cale de mesure 18 avec l'élément de support 14, grâce à la longueur rectifiée de la cale de réglage 16. On obtient un placage entre les faces planes en regard: la face 13 avant de la base de l'élément de support 14 avec la face arrière 15 de la cale de réglage 16 et la face avant 17 de la cale de régale 16 avec la face arrière 19 de la cale d'extrémité 18. Lorsque tous ces éléments sont montés, ils forment un ensemble solidaire où la cale de mesure 18 dépasse légèrement en avant de l'ouverture du U de l'élément de support 14 afin que la face 21 tournée vers l'extérieur et en avant puisse servir de surface de référence pour l'étalonnage. En effet, la somme de la longueur A de la cale de réglage 16 et de la longueur B de la cale de mesure 18 est supérieure à la longueur C des branches de l'élément de support 14.

Dans le montage selon la figure 2, la cale de réglage 16 et la cale de mesure 18 ne dépassent pas par rapport à la section en forme de U de l'élément de support 14 puisque la hauteur de ces éléments est identique et égale à H.
Certaines cales de mesure font saillie perpendiculairement à la direction principale du système de règles-étalons lorsqu'elles sont fixées dans l'élément de support, grâce au moyen de fixation par excentrique.

De telles cales de mesures spécifiques permettent à la fois l'étalonnage d'un système de mesure en mode de mesure de cote extérieure et en mode de mesure de cote intérieure. Dans le mode de mesure de cote extérieure, le système de mesure peut mesurer le diamètre d'un cylindre par exemple; les faces de la règle-étalon utilisées pour l'étalonnage de ce système de mesure seront les faces des cales de mesure tournées vers l'extérieur de la règle-étalon. Dans le mode de mesure de cote intérieure, le système de mesure peut mesurer un alésage par exemple; les faces de la règle-étalon utilisées pour l'étalonnage de ce système de mesure seront les faces des cales de mesure tournées vers l'intérieur de la règle-étalon et qui font saillie par rapport à la cale de réglage et à l'élément de support.

La description qui précède du système de montage représenté aux figures 1 et 2 est valable pour chacune des deux extrémités de toutes les règles-étalons du système de règles-étalons selon l'invention.

Une des cales-étalons est télescopique, elle est constituée de deux parties reliées entre elles par des moyens pour fixer et connaître la position relative de ces deux parties.

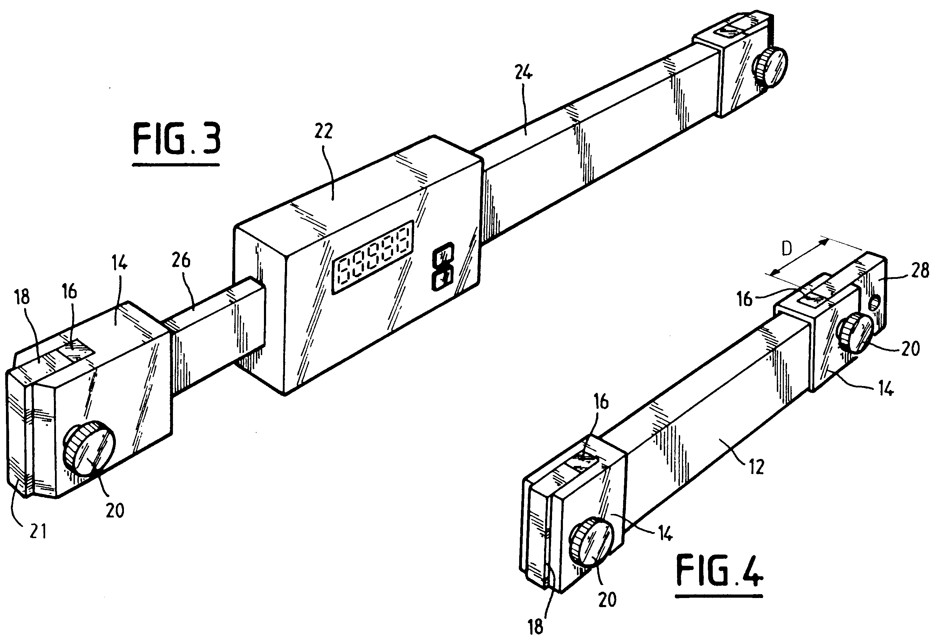

La figure 3 représente une règle-étalon télescopique avec compteur digital 22. La cale-étalon se compose de deux parties (24,26) à section rectangulaire dont l'une (24) est creuse et peut contenir l'autre partie (26). Lorsque la partie 26 est enfoncée au maximum dans la partie 24, la face arrière de l'élément de support 14 vient en butée contre le compteur digital 22 et la longueur totale minimale de cette règle-étalon est connue précisément. Cette longueur correspond à la distance comprise entre les deux faces extérieures 21, perpendiculaires à l'axe principal de la règle-étalon, des cales de mesure 18.

Le compteur digital 22 est situé au niveau de la jonction entre les deux parties (24,26) de la cale-étalon. Ce compteur digital 22 a été monté et réglé pour afficher la longueur sur laquelle la partie 26 a été sortie par coulissement de la partie 24 de la cale-étalon (24,26). Cette longueur variable correspond à la distance qui sépare la face arrière de l'élément de support 14 du compteur digital et elle s'ajoute à la longueur minimale connue. Cette règle-étalon télescopique permet de disposer d'une règle-étalon de longueur variable parmi le jeu des règles-étalons de longueur fixe. A titre d'exemple, cette règle-étalon télescopique possède une longueur minimale de 400 mm et une longueur maximale de 500 mm, toutes les longueurs intermédiaires étant possible grâce au coulissement serré entre les parties (24,26) de la cale-étalon (12). La longueur définie par le système de règles-étalons de la figure 3 correspond à la distance qui sépare les faces de référence de cette règle-étalon, à savoir les faces 21 des cales de mesures qui sont dirigées vers l'extérieur de la règle-étalon. Pour connaître cette longueur de référence, il faut ajouter à la longueur minimale de la règle-étalon télescopique, la valeur affichée par le compteur digital 22.

Une règle-étalon de longueur fixe est représentée sur la figure 4. Elle peut être soit utilisée seule avec deux cales de mesure pour cales d'extrémité soit utilisée comme rallonge avec une autre règle-étalon pour former un système de règles-étalons. Dans ce dernier cas, l'une des cales d'extrémité est une cale de liaison référencée 28 sur la figure 4.

Cette cale de liaison 28 est un parallélépipède rectangle de largeur L, de hauteur H dont la longueur D est au moins le double de la longueur d'une cale de mesure et de préférence exactement le double. Cette cale de liaison 28 possède deux alésages identiques qui vont coopérer avec l'excentrique 20 et l'élément de support 14 de chacune des deux extrémités en regard des règles-étalons voisines.

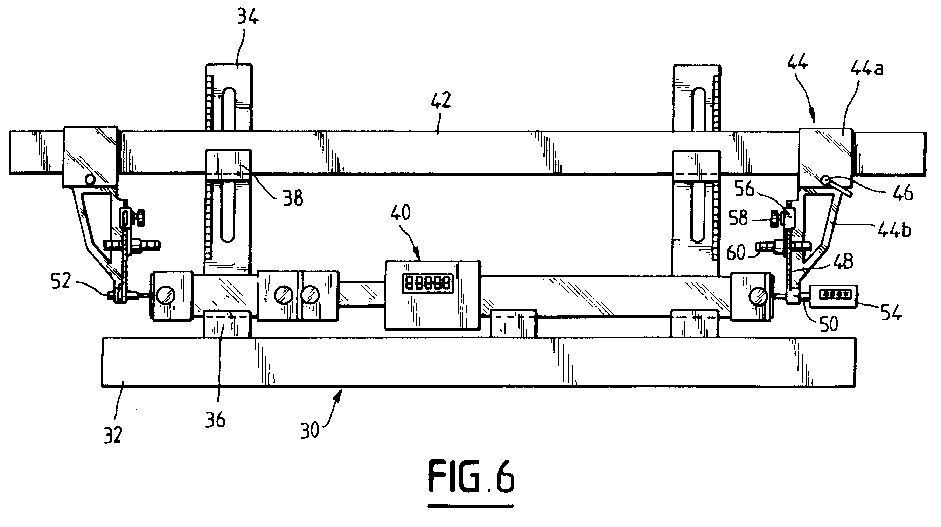

Le système de règles-étalons obtenu par l'assemblage de la règle-étalon télescopique de la figure 3 et d'une règle-étalon de longueur fixe selon la figure 4 est représenté à la figure 5.

Ce système de règles-étalons définit une longueur égale à la somme de la longueur de la règle-étalon de longueur fixe de la figure 4 et de la longueur de la règle-étalon télescopique de la figure 3 dans le cas où la longueur D de la cale de liaison 28 est le double de la longueur B d'une cale de mesure 18.

Les règles-étalons de longueur fixe peuvent être prévues pour former un jeu de règles-étalons, les longueurs de ces différentes règles-étalons allant de 100 mm en 100 mm par exemple.

Grâce à ce jeu de règles-étalons il est possible de former un système de règles-étalons de longueur voulue par assemblage de plusieurs règles-étalons.

La figure 6 illustre le montage réalisé pour l'étalonnage d'un système de mesure de précision grâce au système de règles-étalons tel qu'il est représenté à la figure 5. Un bâti 30 sert de banc d'étalonnage pour le support du système de mesure de précision et du système de règles-étalons afin de faciliter et de rendre plus sûr l'étalonnage. Ce bâti se compose d'une embase 32 sur laquelle sont fixés deux supports verticaux 34 avec éléments d'appui (36,38). Chaque support vertical 34 comprend un élément d'appui bas 36 fixé sur l'embase 32 et un élément d'appui haut 38. La position de ces deux éléments d'appui haut 38 par rapport à l'embase est identique sur les deux supports verticaux 34.

Des éléments d'appui bas supplémentaires peuvent être prévus au niveau de l'embase entre les deux supports verticaux 34. Le système de règle-étalon 40 prend appui sur les appuis bas 36. Une règle d'usage 42 prend appui sur les appuis hauts 38 afin de se trouver parallèle au système de règles-étalons 40. Cette règle d'usage 42 est en carbone, de section rectangulaire et peut être issue d'un jeu de règles d'usage de longueurs différentes.

Deux supports de pige 44 sont montés de manière coulissante et réglable sur la règle d'usage 42. Un excentrique 46 de montage permet de fixer le support de pige 44 de façon amovible à l'endroit désiré de la règle d'usage 42.

Les supports de piges 44 sont réalisés en deux parties (44a, 44b). La partie supérieure 44a du support de pige forme un U retourné qui s'insère exactement sur la règle d'usage et la partie inférieure 44b du support de pige possède une face supérieure qui va combler l'ouverture du U de la partie supérieure 44a. La liaison entre les parties (44a, 44b) du support de pige est réalisée grâce à l'excentrique de montage 46 qui peut être actionné par rotation grâce à une poignée. Lorsque cet excentrique 46 est en position de serrage, il empêche tout mouvement de rotation entre les deux parties (44a, 44b) du support de pige et permet à la face supérieure de la partie inférieure 44b du support de pige de venir se plaquer contre la règle d'usage 42: le support 44 est ainsi fixé sur la règle d'usage 42.

La partie inférieure 44b du support de pige forme une glissière graduée 48 orthogonale à l'axe de coulissement du support de pige et un alésage 50 situé sous la glissière 48 orienté selon l'axe précité. Un système d'excentrique creux avec poignée est monté autour de l'alésage 50 pour permettre la fixation d'une pige mobile sous la forme d'une pige de contact 52 ou du palpeur d'un comparateur de mesure digital 54.

Un coulisseau 56 coopère avec la glissière 48 sur laquelle il peut être fixé par une vis de serrage 58. Le coulisseau 56 porte deux piges de contact 60 symétriques de part et d'autre de l'axe vertical du coulisseau dans des alésages orientés selon l'axe de coulissement du support de pige.

Dans le système de mesure de précision illustré à la figure 6, les piges de contact 60 sont des cylindres avec des rainures périphériques régulièrement espacées. Le réglage de la position des piges de contact 60 est effectué grâce à la coopération d'une des rainures périphériques de la pige de contact avec une petite bille qui dépasse dans l'alésage qui supporte la pige de contact 60 au niveau du coulisseau 56.

La paroi périphérique des piges de contact 60 sert comme surface de butée lors de l'utilisation du système de mesure de précision. L'extrémité de la pige de contact 52 et l'extrémité du palpeur du comparateur de mesure 54 vont se positionner contre les surfaces de référence délimitant la mesure de longueur à effectuer.

Le système de mesure de précision est prévu pour mesurer des cotes extérieures ainsi que des cotes intérieures: par exemple des diamètres externes ou bien des diamètres d'alésage. Ceci est possible car les supports de piges 44 peuvent être retournés par rapport à la direction orthogonale à la règle d'usage. En outre, un élément de butée (non représenté) positionné sur la règle d'usage 42 peut servir de position de référence lorsque le système de mesure de précision passe d'un montage pour mesure extérieure (figure 6) à un montage pour mesure intérieure ou inversement.

Les coulisseaux 56 permettent le réglage en hauteur des piges de contact 60 par rapport au palpeur du comparateur de mesure 54. Pour que l'écart de hauteur soit le même pour les deux supports de piges 44, le coulisseau 56 est positionné précisément grâce à l'échelle graduée de la glissière 48. Le coulisseau 56 peut être retourné sur la glissière 48 par rapport à la direction de la règle d'usage 42.

Tous les éléments constitutifs du système de règles-étalons et du système de mesure de précision sont standards c'est-à-dire que les mêmes éléments possèdent exactement les mêmes dimensions sauf les cales de réglage 16.

Tous les éléments constitutifs du système de règles-étalons et du système de mesure de précision possèdent des dimensions invariables sauf la cale-étalon télescopique (24,26).

Chacune des cales-étalons du système de règles-étalons et/ou chacune des règles d'usage du système de mesure est en carbone et/ou possède une section rectangulaire.

Bien entendu, l'invention n'est pas limitée à l'exemple de réalisation ci-dessus décrit et représenté, à partir duquel on pourra prévoir d'autres formes et d'autres modes de réalisation, sans pour cela sortir du cadre de l'invention.

## Revendications

1. Système de règles-étalons pour l'étalonnage d'appareillage de métrologie de longueur basé sur la mesure par comparaison comportant au moins une règle-étalon (10,16,18,20), chacune desdites règles-étalons est composée d'un un élément principal de règle-étalon (10),
caractérisé en ce que chacune desdites règles-étalons comprend en outre au moins une cale de réglage (16) fixée sur une des extrémités de l'élément principal de règle-étalon et dimensionnée avec précision pour ajuster la longueur de ladite règle-étalon,
en ce que chacune desdites règles-étalons présente en outre au moins une cale d'extrémité (18,28) raccordée sur ladite extrémité de l'élément principal de règle-étalon, avec interposition de ladite cale de réglage, dans le prolongement de ladite règle-étalon,
et en ce que chacune desdites règles-étalons comprend en outre un moyen de fixation amovible de précision de telle sorte que ladite cale d'extrémité (18,28) soit appliquée contre ladite cale de réglage (16) et que ladite cale de réglage (16) soit appliquée contre ladite extrémité de l'élément principal de règle-étalon.

2. Système de règles-étalons selon la revendication 1,
caractérisé en que chacun desdits éléments principaux de règle-étalon (10) est composé d'une cale-étalon (12) et d'au moins un élément de support en forme de U (14) qui prolonge une des deux extrémités de ladite cale-étalon (12), l'ouverture dudit élément de support (14) est orientée dans la direction principale du système de règles-étalons et tournée vers l'extérieur, ledit élément de support (14) constituant la partie terminale de l'élément principal de règle-étalon (10),
et en ce que ledit élément de support en forme de U (14) présente deux bras et une base contre laquelle ladite cale de réglage (16) est fixée, ladite cale d'extrémité (18,28) étant insérée au moins en partie entre les deux bras et plaquée contre ladite cale de réglage (16) grâce audit moyen de fixation amovible de précision.

3. Système de règles-étalons selon la revendication 2,
caractérisé en ce qu'il comprend une règle-étalon composée d'un élément principal de règle-étalon (10), ledit élément principal de règles-étalons (10) étant formé d'une cale-étalon (12) en carbone à section rectangulaire dont chacune des deux extrémités porte un élément de support en forme de U (14), chacun desdits éléments de support (14) supportant une cale de réglage (16) et un moyen de fixation par excentrique (20), ladite règle-étalon comprenant en outre deux cales d'extrémités sous forme de deux cales de mesure (18) dont les faces de butée extérieures forment les faces de référence relatives à la longueur de cette règle-étalon.

4. Système de règles-étalons selon la revendication 2,
caractérisé en ce qu'il comprend une règle-étalon principale et une règle-étalon secondaire, chacune desdites règles-étalons étant composée d'une cale-étalon (12) dont chacune des deux extrémités porte un élément de support en forme de U (14), chacun desdits éléments de support (14) supportant une cale de réglage (16) et un moyen de fixation par excentrique (20), ledit système de règles-étalons comprenant en outre trois cales d'extrémités (18,28) dont une cale de liaison (28) qui relie lesdites deux règles-étalons et deux cales de mesure (18) situées aux extrémités terminales du système de règles-étalons.

5. Système de règles-étalons selon les revendication 1 à 4,
caractérisé en ce que ledit moyen de fixation amovible de précision est constitué par un excentrique de montage (20) destiné à coopérer avec des alésages situés au niveau de la cale d'extrémité (18,28) d'une part et dans la partie terminale de l'élément principal de règle-étalon (14) d'autre part de façon à solidariser chacune desdites cales d'extrémité (18,28) avec ledit élément principal de règle-étalon (14).

6. Système de règles-étalons selon la revendication 4 ou 5,
caractérisé en ce que certaines cales de mesure ( 18) font saillie de façon perpendiculaire par rapport à la direction principale du système de règles-étalons, lorsqu'elles sont montées dans ledit élément de support (14).

7. Système de règles-étalons selon l'une des revendications 1 à 6,
caractérisé en ce que l'une desdites cales-étalons est constituée de deux parties (24,26) reliées entre elles par des moyens pour fixer et connaître la position relative desdites parties (24,26).

8. Dispositif de mesure de précision dont la longueur utile est réglable à l'aide du système de règles-étalons selon l'une quelconque des revendications 1 à 7,
caractérisé en ce qu'il est composé d'au moins une règle d'usage (42) sous forme d'un gabarit de longueur et de deux supports de piges (44) qui sont montés de manière coulissante et réglable sur l'une desdites règles d'usage (42), lesdits supports (44) étant munis d'une glissière (48) orthogonale à l'axe de coulissement des supports de pige pour permettre le réglage de certaines piges (60) dans cette direction grâce à des coulisseaux (56) qui supportent lesdites piges (60) et qui coopèrent avec ladite glissière (48), chaque support de pige (44) étant fixé sur la règle d'usage au moyen d'un excentrique (46).

9. Dispositif de mesure de précision selon la revendication 8,
caractérisé en ce que l'une des piges portée par l'un desdits supports de piges (44) est mobile et comporte un comparateur de mesure (54), ladite pige mobile étant fixée au support de pige (44b) grâce à un excentrique (50).

10. Dispositif de mesure de précision selon l'une quelconque des revendications 8 ou 9,
caractérisé en ce que lesdits supports de piges (44) peuvent être retournés par rapport à la direction orthogonale à la règle d'usage (42) pour, avec le même dispositif de mesure, pouvoir effectuer ou bien des mesures d'alésage ou bien des mesures de pièces mâles,
en ce que lesdits coulisseaux (56) peuvent être retournés sur ladite glissière (48) par rapport à la direction orthogonale à ladite glissière (48)
et en ce que chacune desdites règles d'usage est en carbone et possède une section rectangulaire.
